# EUROPEAN PATENT APPLICATION

(11) **EP 1 316 889 A2**
(43) Date of publication of application: **04.06.2003**
(21) Application number: 02025637.6
(22) Date of filing: 19.11.2002
(51) Int. Cl.: G06F 13/366, H04L 12/403

(54) **Multi-purpose generic serial port controller**

(30) Priority: 20.11.2001 US 990139
(71) Applicant: Sharewave, Inc., El Dorado Hills, CA 95762 (US)
(72) Inventor: Mounsef, Elias, Rancho Cordova, California 95670 (US)
(74) Representative: UEXKÜLL & STOLBERG

(57) **Abstract**

A bus controller has an associated programmable register with address and control window components that may be programmed according to the size of address and control data packet components for packets received across a bus coupled to the controller. In particular, the programmable register may be programmed with address data and payload data bit lengths corresponding, respectively, in size to address and payload data bit lengths used by a peripheral device coupled to the bus.

## Description

### FIELD OF THE INVENTION

The field of the invention relates to home networks having a variety of integrated peripheral devices.

### BACKGROUND OF THE INVENTION

Powered by wireless technology, home networks link similarly enabled electronic devices such as personal computers (PCs), keyboard devices, flat screen displays, printers, scanners, and stereo systems. Many Home Networks also offer broadband access to Internet multimedia content, as well as the capability to interact with network devices in real-time.

For example, PC-to-PC connections provide wireless file sharing, peripheral sharing (printers, scanners, movies, and multi-player gaming), and shared high-speed Internet access, while Mobile PC connections allow notebook PC users to move freely throughout the home environment without being connected. TV set-top devices enable PC sessions to be broadcast and viewed on a television screen, and permit users to access a remote PC's resources from the entertainment center. Resources offered by a remote PC may include Internet access, printer access, and access to software applications. Other home network devices may include flat panel display devices mounted in the kitchen to provide access to the home network; small, portable handheld displays that have a high-speed, wireless connection to a PC, broadband modem, or residential gateway; and video recording devices that are linked to the home network for personal videoconferencing and/or security purposes.

### DATA COMMUNICATIONS

In a communications network, transmission of data in and between communications devices is integral to the successful operation of the network. Data is transmitted by a message source to one or more message receivers. Typically, the message receivers are independently powered communications devices external to the transmitting devices. If the transmitting device is a personal computer or a controller device, exemplary message receivers, called peripheral devices, may include DVD players, CD ROMs, digital cameras, printers, scanners, monitors, and similar electronic devices. For a general overview of data communications, see *Data Communications Basics: A Brief Introduction to Digital Data Transfer,* written by Christopher E. Strangio of CAMI Research, Inc., Lexington, Massachusetts, and available at http://www.camiresearch.com/Data Com Basics/data_com_tutorial.html. The following is a review of some basic principles which are helpful in understanding the present invention.

### COMMUNICATIONS CHANNELS

In a communications network, data is transmitted over predefined pathways called channels, which may be defined by a physical wire connecting communicating devices, or by a radiated energy source, that does not rely on wired pathways. Examples of radiated energy sources include radio frequency, lasers, and microwave sources. In a digital communications channel, data comprising messages is represented by individual binary digits (bits), which can represent only one of two values: "0" or "1". Eight (or more) bits may be combined to form a multi-bit unit called a byte, and groups of bytes may be encapsulated in a frame or other higher-level message unit.

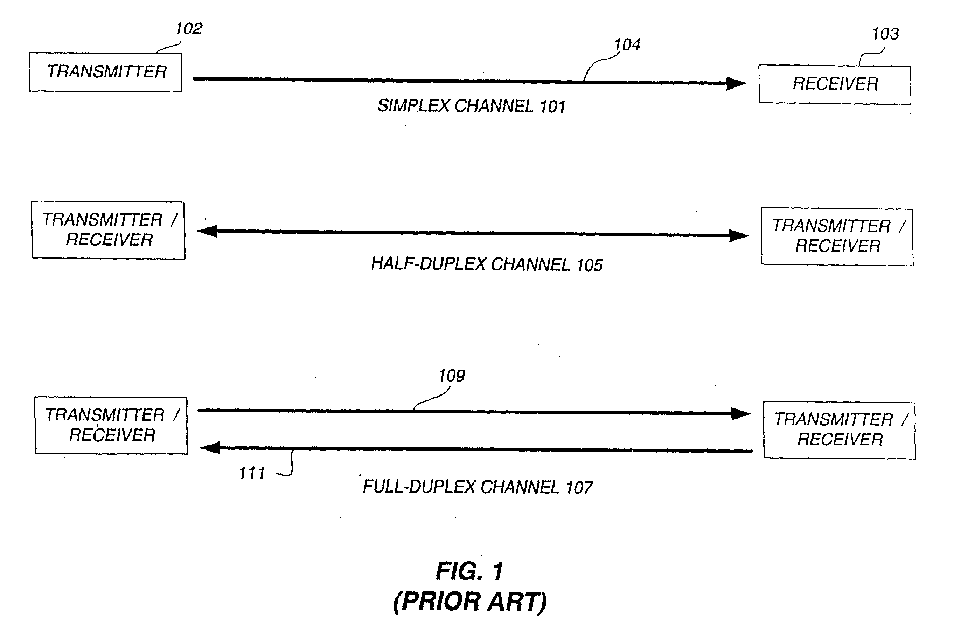

**FIG. 1** illustrates several exemplary types of communication channels common in the prior art. Each channel has a unique direction associated with it, indicated by arrows. At its irreducible minimum, a channel 101 consists of a transmitter 102, a receiver 103, and a communication pathway 104. A unidirectional channel, as exemplified by channel 101, is called a simplex channel.

Channel 105 exemplifies a half-duplex channel, which is merely a single, bi-directional, communication pathway in which data can flow in opposite directions, but never at the same time. An example of a half-duplex channel is a walkie-talkie system, in which one person talks and another listens.

Full-duplex channel 107 uses two simplex channels, a forward channel 109 and a reverse channel 111, to allow the exchange of data in two directions simultaneously.

### SERIAL COMMUNICATIONS

Because it is not practical to transmit all bits of a message simultaneously, due to the large number of bits that make up the message, bit-serial transmission is used to convey the message one bit at a time through a channel. At the receiving end, individual bits are reassembled to recompose the message.

### ASYNCHRONOUS AND SYNCHRONOUS TRANSMISSION

Generally, individual bits are not sent through a channel at a uniform rate. Typically, data flow starts and stops many times during a bit-serial transmission. For example, a burst of regularly spaced binary data bits, called a packet, may be followed by a pause of variable length before data flow is resumed. In order for the receiving device to accurately read individual data bits from the channel, it must know exactly when each packet starts and how much time elapses between bits. Synchronization occurs when the transmitter and receiver(s) share the same timing information. Unsynchronized transmission may result in data being corrupted or lost.

Synchronization may be achieved using one of several techniques. In synchronous systems, data information and timing information are transmitted to the receiving device over separate communication channels. In these systems, the transmitter generates and drives clock pulses to the receiver over the timing channel. Upon receipt of a clock pulse, the receiving device reads the data channel, laches whatever bit that appears therein at that moment, and then waits for the next clock pulse. In this way, synchronization is guaranteed because the receiving device only reads the data channel when instructed to do so by the transmitter.

In asynchronous systems, where both communicating devices are configured in advance with timing circuitry, separate clock and data channels are not used. Instead, the receiving device's internal oscillator will generate an internal clock signal that is matched to the transmitter's clock signal by extracting clock information from the data signal.

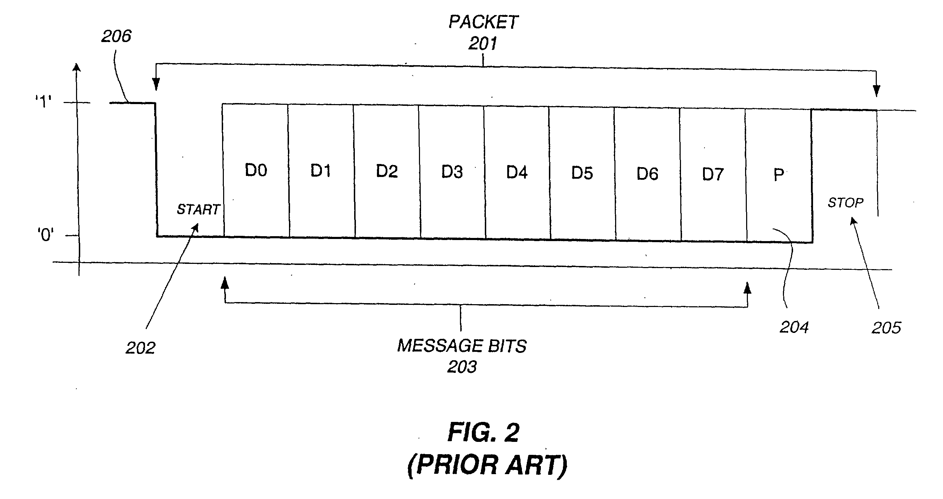

**FIG. 2** is a diagram illustrating a typical prior art packet 201 that includes a start bit 202, eight consecutive data (message) bits 203, a parity bit 204, and a stop bit 205. In an asynchronous system, the signal voltage 206 corresponds to a continuous '1' when the channel is idle, and to a '0' when the channel carries data. Start bit 202 begins each data packet by setting the signal voltage 206 to '0' to signal the receiver that a transmission is starting, and by instructing the receiver's internal oscillator to begin generating clock pulses. Message (data) bits 203 are then transmitted one bit at a time. The packet is concluded with a parity bit 204, used for error detection, and with a stop bit 205, which adjusts the signal voltage 206 to again correspond to '1'.

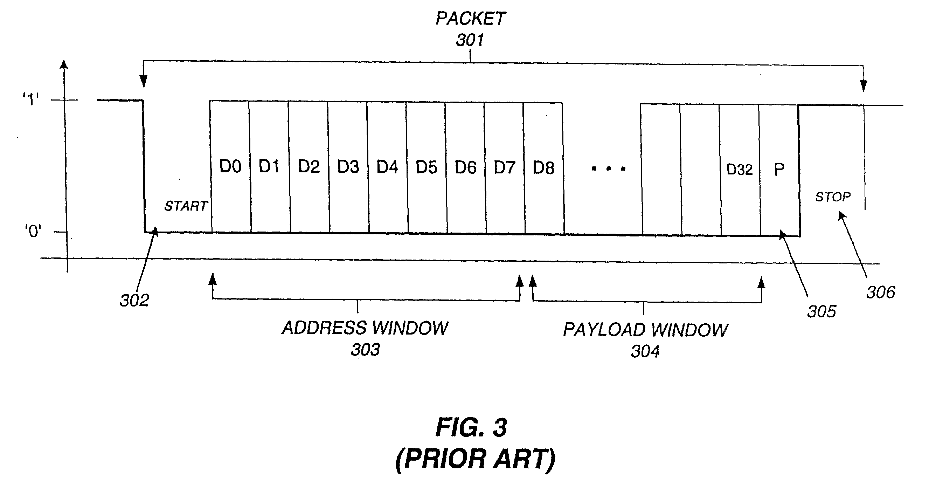

**FIG. 3** illustrates another prior art packet 301, which includes start bit 302, address window 303, payload window 304, parity bit 305, and stop bit 306. Because there is no uniform standard for serial port interfaces, the sizes of address window and payload window fluctuate according to the design of each communication device. For example, a 32-bit packet associated with a DVD player may have an eight-bit long address window, followed by a twenty-four-bit long payload window. Alternatively, a 16-bit packet associated with a digital camera may have an address window 4 bits long, and a payload window 12 bits long. In order for communicating devices to accurately transmit and receive data, the address and payload window bit lengths of the transmitted packet must match the address and payload bit window bit lengths used by a particular peripheral. For example, effective communication may not occur where a PC transmits a 32-bit packet to a DVD player configured to receive only 16 bit packets.

It is this lack of a uniform serial port interface standard that creates problems for network designers and results in serial port controllers that are designed differently to interface to specific devices. The fact that each peripheral device requires a different controller design limits the adaptability and expansion capabilities of the home network, especially as the home network grows beyond PCs to include multimedia devices such as DVD players, game consoles, residential gateways, digital cameras, personal videoconferencing systems, digital cable boxes, digital video recorders, and digital televisions.

What is needed is a serial port controller design that interfaces with multiple peripheral devices without any logic changes or any design efforts needed. Such a design would save time, reduce the logic gate count, and enable the home network to automatically adapt to the insertion or removal of network peripheral devices by self-tuning and self-configuring the network.

### SUMMARY OF THE INVENTION

A serial port controller design that interfaces with multiple peripheral devices without any logic changes or any design efforts is described herein. In one embodiment, the controller includes a central processing unit (CPU) and a programmable register having address and control windows for address and control data. The controller is designed to be interfaced with a bus, e.g., as needed for connection to a peripheral device. As mentioned, the programmable register has address and control windows for address and control data. Thus, the programmable register may be programmed with address data and payload data bit lengths corresponding, respectively, in size, to address and payload data bit lengths used by the peripheral device. In this way, the controller can be readily adapted for use with any of a number of peripherals according to the programming of the window sizes in the register.

### BRIEF DESCRIPTION OF THE DRAWINGS

The present invention is illustrated by way of example and not limitation in the figures of the accompanying drawings, in which like references indicate similar elements.

**FIG. 1** is a diagram illustrating three types of communication channels common in the prior art.

**FIG. 2** is a diagram of a typical prior art data packet.

**FIG. 3** is a diagram of another prior art data packet subdivided into an address window and a payload window.

**FIG. 4** is a diagram illustrating the use of a conventional controller for PCs and other embedded client devices and also adaptable for use in accordance with an embodiment of the present invention.

**FIG. 5** is a diagram showing operation of a controller device provided by one embodiment of the present invention.

**FIG. 6** is a diagram showing operation of a controller device provided by another embodiment of the present invention.

**FIG. 7A** is a diagram illustrating the operation of a controller and a peripheral device according to another embodiment of the invention.

**FIG. 7B** is a diagram illustrating the operation of a plurality of channels, according to one embodiment of the invention.

**FIG. 8** is a diagram showing how up to four serial writes may be grouped and triggered in a single burst, according to another embodiment of the invention.

**FIG. 9** is a flowchart of a method provided by an embodiment of the present invention.

### DETAILED DESCRIPTION OF PREFERRED EMBODIMENTS

In the following detailed description, numerous specific details are set forth in order to provide a thorough understanding of the present invention. However, it will be apparent to one of ordinary skill in the art that these specific details need not be used to practice the invention. In some circumstances, well known structures and materials have not been shown or described in detail in order not to unnecessarily obscure the present invention.

A serial port controller design that interfaces with multiple peripheral devices without any logic changes or any design efforts is described herein. Although discussed with reference to various illustrated embodiments, it should be remembered that the present invention is not to be limited thereby and that these examples are included for the purpose of providing a clear understanding of the invention, which is defined in the claims which follow this description.

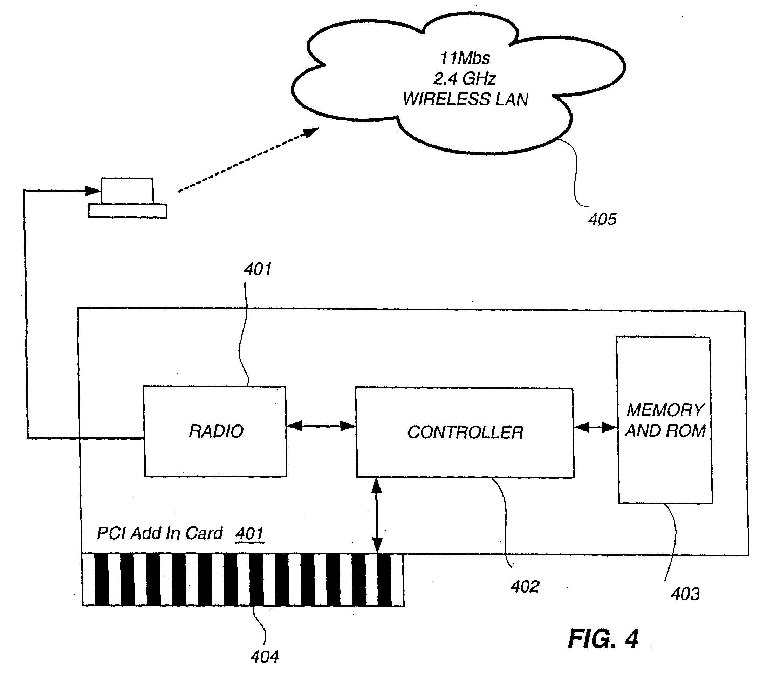

**FIG. 4** is a diagram illustrating a controller 402 for PCs and other embedded client devices. Controller 402 may be included as one or more components mounted on a card 401 (e.g., a card that complies with the peripheral component interconnect (PCI) bus standard or other similar industry standard for computer devices (such as the PCMCIA bus interface standard, etc.)), the traces 404 of which can be mated with an expansion slot or other bus interconnect on a PC. The PCI standard is a local bus standard developed by Intel Corporation of Santa Clara, CA. PCI is a 64-bit bus, though it is usually implemented as a 32-bit bus. It can run at clock speeds of 33 or 66 MHz. At 32 bits and 33 MHz, it yields a throughput rate of 133 MBps. Most modern PCs include a PCI bus in addition to a more general ISA expansion bus. In one embodiment, controller 402 may be coupled with a memory and read only memory (ROM) 403, and with a radio 401, which is wirelessly coupled to one or more peripheral devices in wireless local area network (LAN) 405. Typically, traces 404 couple controller 402 to a Central Processing Unit (CPU) for the computer system as a whole (not shown) via a control bus, a physical connection that carries control information between the CPU and other devices within the computer. Whereas the data bus carries actual data that is being processed, the control bus carries signals that report the status of various devices. For example, one line of the bus is used to indicate whether the CPU is currently reading from or writing to main memory.

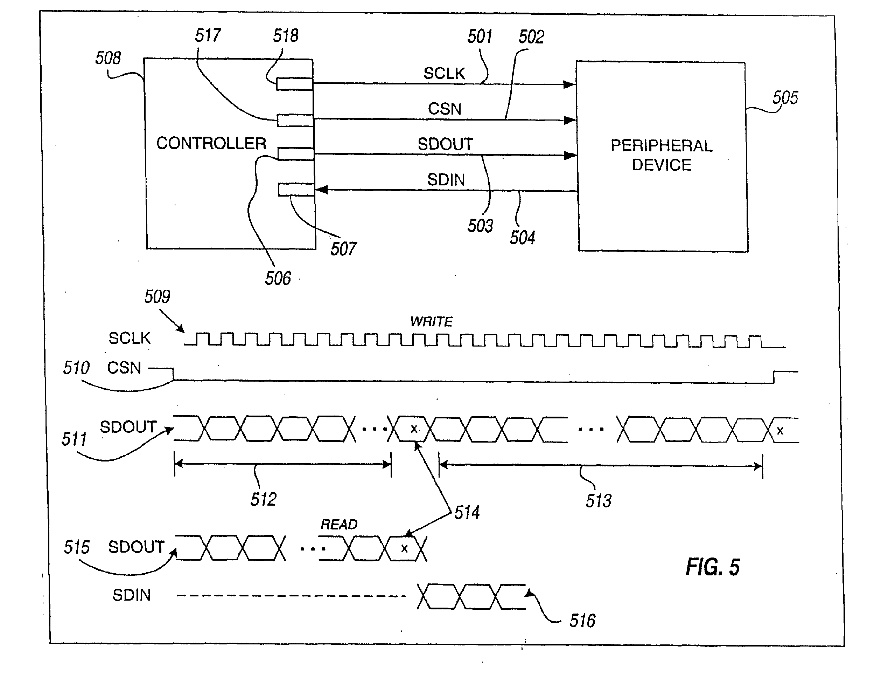

**FIG. 5** is a diagram showing operation of a controller device 508 and a peripheral device 505 according to one embodiment of the present invention. The controller may have an onboard CPU or other intelligence (which may be embodied as a digital signal processing (DSP) unit that directs the operation of its various functional blocks and allows for memory transactions. In one embodiment, controller 508 is programmable through the use of an associated programmable register. The programmable register may be implemented as a designated portion of a computer system's main or other memory or, in some cases, may be a dedicated register that is included in an integrated circuit that also includes the controller itself. In the latter case, the bus is an internal bus. Controller 508 may be located on a PCI expansion card, and may be coupled with a CPU, control and data buses, and a wireless radio. In one embodiment, controller 508 communicates with peripheral device 505 using pins 518, 517, 506, and 507, which define four separate communications channels, 501, 502, 503, and 504, respectively. Peripheral device 505 may include any one of a number of electronic devices, such as: PCs, notebook computers, TV-set top devices, flat, portable display devices, residential gateways, closet servers, digital cameras, printers, scanners, game consoles, and similar electronic devices.

In one embodiment, pin 518 may define a timing channel 501, which may be used to convey clock pulses 509 generated by an internal oscillator in controller 508 to peripheral device 505. Whenever a clock pulse is received, peripheral device 505 reads a data channel 503 and laches data therein. In this manner, controller 508 and peripheral device 505 may be synchronized to ensure accurate transmittal of information back and forth.

If a wireless connection is used to couple controller 508 with peripheral device 505, the signals generated by the controller 508 may be routed to a radio modem and wirelessly transmitted to peripheral device 505, and *vice versa.* Examples of suitable programmable controllers include the SWN2110 and SWN2120 manufactured by Sharewave, Inc. of El Dorado Hills, California.

Referring again to **FIG. 5**, Pin 517 may define a command signal channel 502, which may be used to convey a command signal 510 to peripheral device 505. Command signal 510 may be configured to correspond to a "1" when channel 502 is idle, and to correspond to a "0" when channel 502 carries data traffic.

Pin 506 may define a serial device out (SDOUT) data channel 503, which controller 508 may use to transmit SDOUT signals 511 containing data packets to peripheral device 505. In one embodiment, a data packet may contain programmable, variable bit-length address and payload windows, 512 and 513, respectively. Turn around slot 514 may be provided to allow the controller 508 and peripheral device 505 to switch back and forth between write and read operations.

Pin 507 may define a serial device in (SDIN) data channel 504, which controller 508 may use to receive data from peripheral device 505. For read operations, peripheral device may be configured to read signal 515 for a predetermined number of clock cycles, and to transmit a SDIN signal 516 to controller 508 for another predetermined number of clock cycles, after pausing at turn around slot 514.

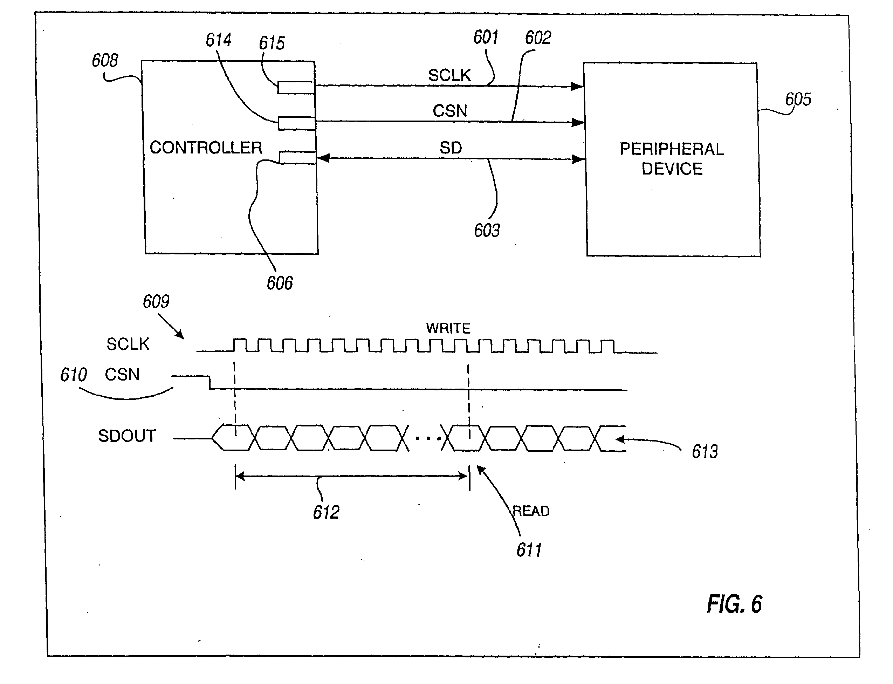

**FIG. 6** is a diagram of the operation of another controller 608 and its associated peripheral device 605. In this embodiment, pin 615 defines a serial clock channel 601, and pin 614 defines a command signal channel 602, as described above with reference to **FIG. 5**. Similarly, clock pulses 609 and command signal 610 also operate as described above. Pin 606 may define a half-duplex serial data (SD) channel 603, in which data can be transmitted in both directions, but never at the same time. In the embodiment shown in **FIG. 6**, the peripheral device 605 is configured to expect a certain amount of opcode, address, and data bits. For example, in one embodiment, programmable controller 608 is able to deliver any number of opcode, address, and data bits 613 for a maximal combined total of about 32 bits. Similarly, one embodiment of a programmable register coupled with controller 608 is able to receive any number opcode, address, and data of bits for a total of up to 32 bits. In other words, the opcodes, address, and data bits for each peripheral device have a known length 612.
At turnaround point 611, the data flow may reverse direction. For example, a write operation may cease, and be followed by a read operation, or *vice versa.*

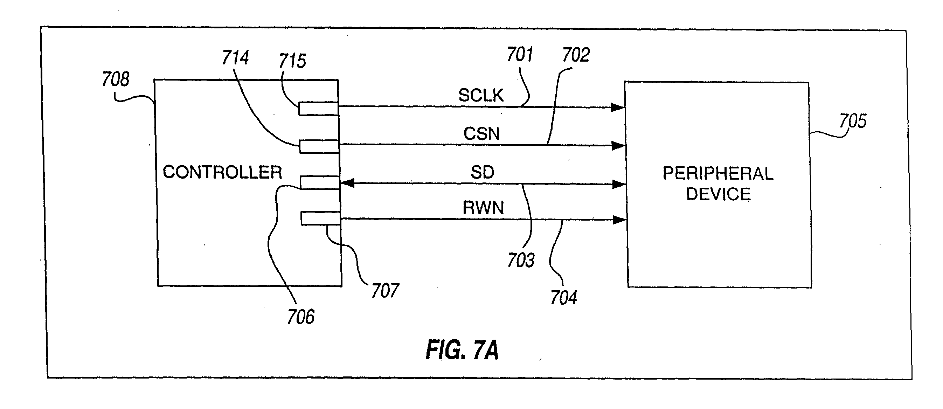

**FIG. 7A** is a diagram illustrating the operation of a controller 708 and a peripheral device 705 according to another embodiment of the invention. Pins 715 and 714 may define serial clock channel 701 and command signal channel 702, respectively, as described above with reference to **FIG. 5**. Similarly, pin 706 may define a half-duplex serial data channel 703, as described above. In one embodiment, pin 707 may define a read not/write not signal channel 704, which controller 708 may use to command peripheral device 705 when to perform write and read operations.

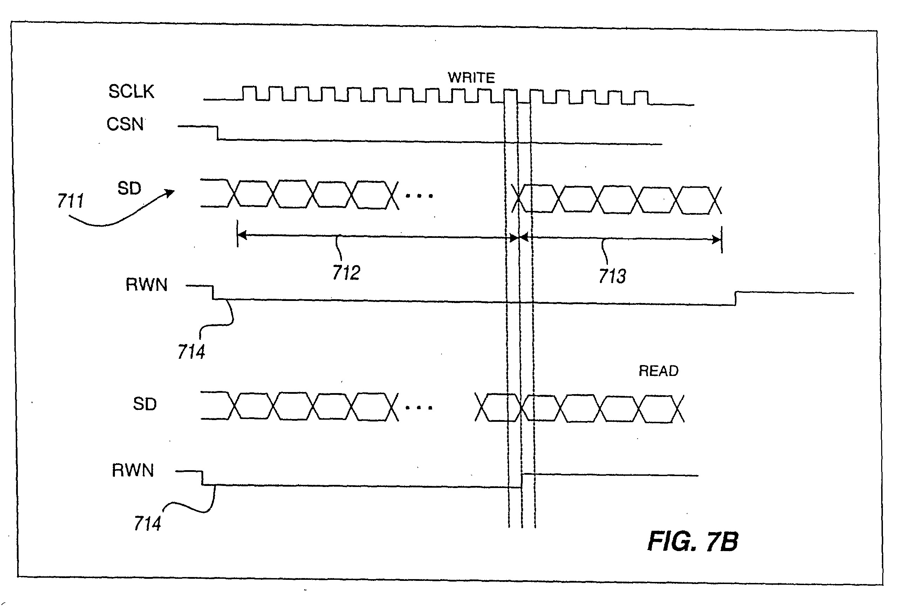

Referring now to **FIG. 7B**, and also to **FIG. 7A, FIG. 7B** depicts a diagram illustrating the operation of channels 701, 702, 703, and 704 of **FIG. 7A,** according to one embodiment of the invention. For example, serial data signal 711 may include programmable, variable bit-length address and payload windows, 712 and 713, respectively. As shown in **FIG. 7B**, read not/write not signal 714 may be configured to correspond to a "1" when controller 708 instructs peripheral device 705 to read data, and to correspond to a "0" when controller 708 instructs peripheral device 705 to write data. In one embodiment of a read operation shown in **FIG. 7B**, peripheral device 705 drives data on the rising edge of signal 711, and controller 708 laches the data on the falling edge of signal 711. In another embodiment, these operations may be reversed.

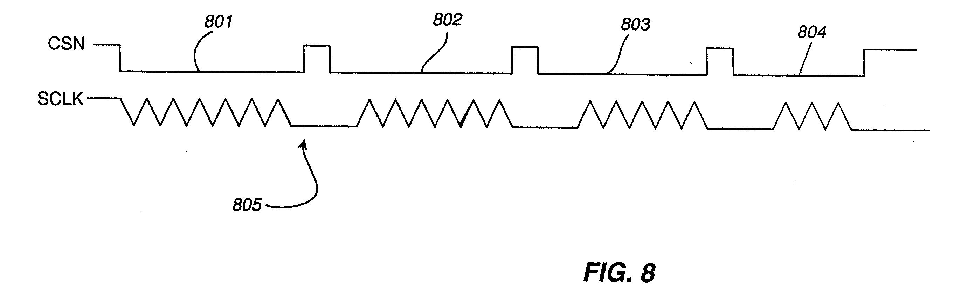

**FIG. 8** is a diagram illustrating how up to four serial writes may be grouped and triggered in single burst according to one embodiment of the invention. The reference numerals 801, 802, 803, and 804 each represent an individual serial write operation. Numeral 805 represents a plurality of serial clock signals. In the past, programmers had to execute a first serial write operation; wait; and then execute another serial write operation, and so on. The present invention improves on this process by providing a method of grouping up to four serial write operations, back-to-back, in a single data burst. Data in each serial write operation may be addressed to the same or to different registers. The four serial write operations are prepared internally, and the corresponding enable bits for each write are configured to enable/disable each of the four possible write operations. Once address, data, and enable bits are ready and programmed internally, the write trigger is triggered and the consecutive serial writes are shifted out automatically.

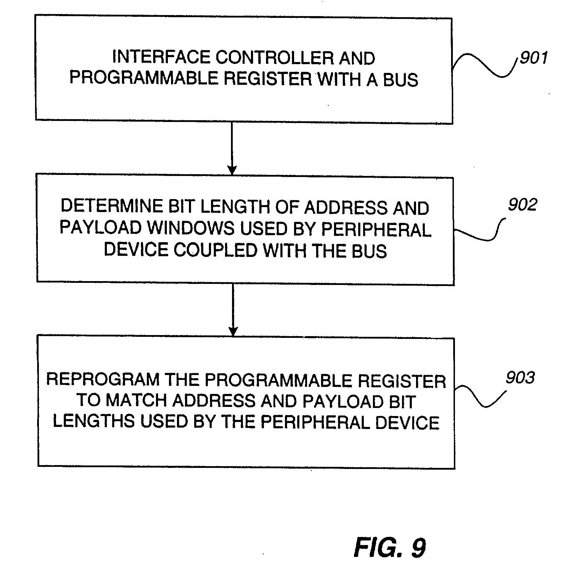

**FIG. 9** is a flowchart illustrating a method provided by one embodiment of the present invention. At block 901, a controller and a programmable register are interfaced with a bus, and, in one embodiment, a CPU. At block 902, a programmer determines the type of peripheral device that will be interfaced with the controller. In another embodiment, the controller may be designed to automatically detect the type of peripheral device that it will interface with. However, in some cases, auto-detection via automatic discovery processes common in plug-and-play environments may not be feasible. In such cases, the interface method may vary according to the type of hardwardware platform supported. Once the type of peripheral device has been determined, the programmer then identifies the bit lengths that the peripheral device uses for the address and payload windows. At block 903, the programmer programs the bit lengths of the programmable register's address and payload windows to correspond to the bit lengths used by the peripheral device.

In other words, the programmable register discussed above is partitioned into an address window component and a payload window component. The value loaded into the address window component of the register will determine the size of the address window used during serial transmissions/receptions by the controller. Similarly, the value loaded into the payload window component will determine the size of the payload window used during serial transmissions/receptions by the controller. The serial transmissions/receptions may correspond to any of the above-described schemes.

By providing the ability for the address and payload window sizes to be updated (at any time) through the programmable register, the present invention provides a serial port controller design that is capable of interfacing with multiple peripheral devices. As indicated above, the programmable register can be updated manually by a programmer or a user at the time a peripheral is installed, or the register can be updated automatically through a discovery process when the peripheral is introduced to the network/system. In the latter case, it is expected that the peripheral will include a boot ROM or other memory source that will provide information regarding its address and payload window sizes to a master device upon joining the network/system. The master device can then use this information to automatically update the programmable register accordingly.

It will be appreciated that the address and data size may be predetermined for each serial device. For example, if the hardware contains a serial device "X" which expects 8 bits address and 8 bits data, the controller's programmable address and data registers may be set to operate at 8 bits each. In another case, the programmable address and data registers may need to be set to 8 bits address and to 16 bits data when interfacing with a second device "Y." A special case involves a network containing a programmable controller that connects to different peripheral devices. For example, device "A" may expect 8 bits address and 8 bits data, while device "B" may expect 12 bits address and 16 bits data. In this case, the sizes of the controller's programmable registers may be set to the 8 bit size so that the controller can communicate with Device "A". When the controller needs to communicate with Device "B", the size of its programmable registers may be changed to 12 bits address and 16 bits data, and so on.

In one embodiment, the sizes are stored in their own separate registers (e.g. size_reg). When doing writes, the address and data bits for each serial write come from different registers (e.g. four registers allows one register for each write, up to four writes - Reg 1, Reg 2, Reg 3, and Reg 4). When doing a read, Reg 1 from above is used to store address only; and when read data comes back, it is stored back in Reg 2 (same as above).

Thus, a serial port controller having a programmable register for address and control windows has been disclosed. Although the present invention has been described herein with reference to various illustrated embodiments, many modifications and variations therein will readily occur to those with ordinary skill in the art. For example, the controller may have multiple serial ports, each with its own programmable register. In this way, a single controller can be used for multiple serial interfaces, each having a different address/control window size. Accordingly, all such variations and modifications are included within the intended scope of the present invention as defined by the following claims.

## Claims

1. A method, comprising:
defining address and control windows for a bus for address and control data to be transmitted via the bus using a bus controller associated with a programmable register by assigning an address window component and a payload window component to portions of the programmable register; and
programming the programmable register with address data and payload data bit lengths corresponding respectively in size to address and payload data bit lengths used by a peripheral device operatively connected with the bus.

2. The method as in claim 1 wherein the programmable register is configured to store up to 32 bits of opcode, address, and data bits.

3. The method as in claim 1, further comprising:
communicating with the peripheral device over a full-duplex channel.

4. The method as in claim 1, further comprising:
communicating with the peripheral device over a half-duplex channel.

5. The method as in claim 1, further comprising:
communicating with the peripheral device using a half-duplex channel and a second channel, wherein the second channel includes a read not/write not signal used to instruct the peripheral device when to write data and when to read data over the half-duplex channel.

6. The method as in claim 1, further comprising:
decoupling the peripheral device from the bus;
operatively coupling a second peripheral device to the bus; and
reprogramming the programmable register with second address and second control data bit lengths corresponding respectively to second bit lengths used by the second peripheral device for address data and payload data.

7. A method, comprising:
interfacing a bus controller having an associated programmable register with a bus, the programmable register having a control window and a data window, the control window programmable to store a variable address data bit length and the data window programmable to store a variable payload data bit length;
coupling a peripheral device with the bus;
determining bit lengths used by the peripheral device for address data and payload data; and
programming the programmable register with an address data bit length and a payload data bit length corresponding respectively in size to bit lengths used by the peripheral device for address and payload data.

8. The method as in claim 7 wherein coupling a peripheral device to the bus further comprises:
communicating with the peripheral device over a full-duplex channel.

9. The method as in claim 7 wherein coupling a peripheral device to the bus further comprises:
communicating with the peripheral device over a half-duplex channel.

10. The method as in claim 7 wherein coupling a peripheral to the bus further comprises communicating with the peripheral using a half-duplex channel and a second channel, wherein the second channel includes a read not/write not signal used to instruct the peripheral device when to write data and when to read data over the half-duplex device.

11. The method as in claim 7, further comprising:
decoupling the peripheral device from the bus;
operatively coupling a second peripheral device to the bus; and
reprogramming the programmable register to have second address and second control data bit lengths corresponding respectively to second bit lengths used by the second peripheral device for address data and payload data.

12. A controller, comprising:
a central processing unit (CPU) and a programmable register, the programmable register configured to define address and control windows for address data bit lengths and payload data bit lengths, respectively, wherein the address data bit lengths and a payload data bit lengths correspond, respectively, to bit lengths used by a peripheral device for address data and payload data.

13. The controller as in Claim 12 wherein the programmable register is configured to store up to 32 bits of data.
